# EUROPEAN PATENT SPECIFICATION

(11) **EP 0 849 944 B1**
(45) Date of publication and mention of the grant of the patent: **15.09.2004**
(21) Application number: 97308055.9
(22) Date of filing: 10.10.1997
(51) Int. Cl.: H04N 5/782

(54) **System for carrying out programmed recording**
Anlage zur Ausführung programmierter Aufnahme
Système pour exécuter l'enregistrement programmé

(30) Priority: 19.12.1996 KR 9668157
(43) Date of publication of application: 24.06.1998
(73) Proprietor: Samsung Electronics Co., Ltd., Suwon City, Kyungki-do (KR)
(72) Inventor: Lee, Taek Ho, Kangbook-gu Seoul (KR)
(74) Representative: Mounteney, Simon James

(56) References cited:
- EP-A- 0 191 149
- EP-A- 0 503 070
- EP-A- 0 682 452
- WO-A-96/36172
- DE-A- 3 530 642
- DE-A- 19 714 472
- US-A- 5 390 027

## Description

### BACKGROUND OF THE INVENTION

### 1. Field of the invention

The present invention relates to a system for carrying out a programmed recording in which by utilizing a teletext function, a channel information stored in a magnetic recording/reproducing apparatus is compared with a channel information of a programmed recording information received through a jack, thereby carrying out a programmed recording based on the received programmed recording information in a simple manner.

### 2. Description of the related art

Generally, when a user wants to carry out a programmed recording, broadcast signals having teletext data within a VBI (vertical blank interface) are received. By utilizing a teletext circuit section, only teletext data are detected from among the received broadcast signals, and a magnetic recording/reproducing apparatus outputs the detected teletext data to a TV screen.

Then if the outputted data, i.e., the data to undergo a programmed recording is selected, then the appointed time and the channel for the selected program are stored. Then at the appointed time, the programmed recording is carried out by receiving the broadcast signals of the relevant channel through a broadcast receiving section.

However, in carrying out the programmed recording by receiving the broadcast signals through an antenna, if the programmed recording is to be carried out in a convenient manner by utilizing the teletext function, a teletext circuit section has to be installed even within the magnetic recording/reproducing apparatus, this being a disadvantage

US 5,390,027 discloses a television program recording and reproducing system in which television program information contained in an extracted text broadcast signal is selected and input to a video cassette recording device.

### SUMMARY OF THE INVENTION

The present invention is intended to overcome the above described disadvantage of the conventional technique.

Therefore it is an object of the present invention to provide a system for carrying out a programmed recording, in which teletext data detected by a teletext circuit section of a TV is used as a programmed recording information, so that a programmed recording can be carried out in a simple and exact manner even without installing a teletext circuit section within a magnetic recording/reproducing apparatus.

In achieving the above object, the system for carrying out a programmed recording according to the present invention includes: a TV receiver for outputting a programmed recording information for a selected program in accordance with the intention of the user from among teletext data of broadcast signals received through an antenna; a magnetic recording/reproducing apparatus for storing the programmed recording information of the TV receiver, and for executing the programmed recording based on the programmed recording information; and a jack for connecting the TV receiver and the magnetic recording/reproducing apparatus to receive and transmit the programmed recording information and OSD messages.

### BRIEF DESCRIPTION OF THE DRAWINGS

The above object and other advantages of the present invention will become more apparent by describing in detail the preferred embodiment of the present invention with reference to the attached drawings in which:
FIG. 1 is a block diagram showing the constitution of the compact apparatus for carrying out a programmed recording according to the present invention;
FIG. 2 is a flow chart showing the programmed recording operation of the TV receiver of FIG. 1;
FIG. 3 is a flow chart showing the programmed recording operation of the magnetic recording/reproducing apparatus of FIG. 1;
FIG. 4a illustrates a picture state showing teletext data in TV;
FIG. 4b illustrates an OSD message notifying the completion of the programmed recording; and
FIG. 4c illustrates the picture state of the OSD message in which the channel selection data for the programmed recording are entered.

### DETAILED DESCRIPTION OF THE PREFERRED EMBODIMENT

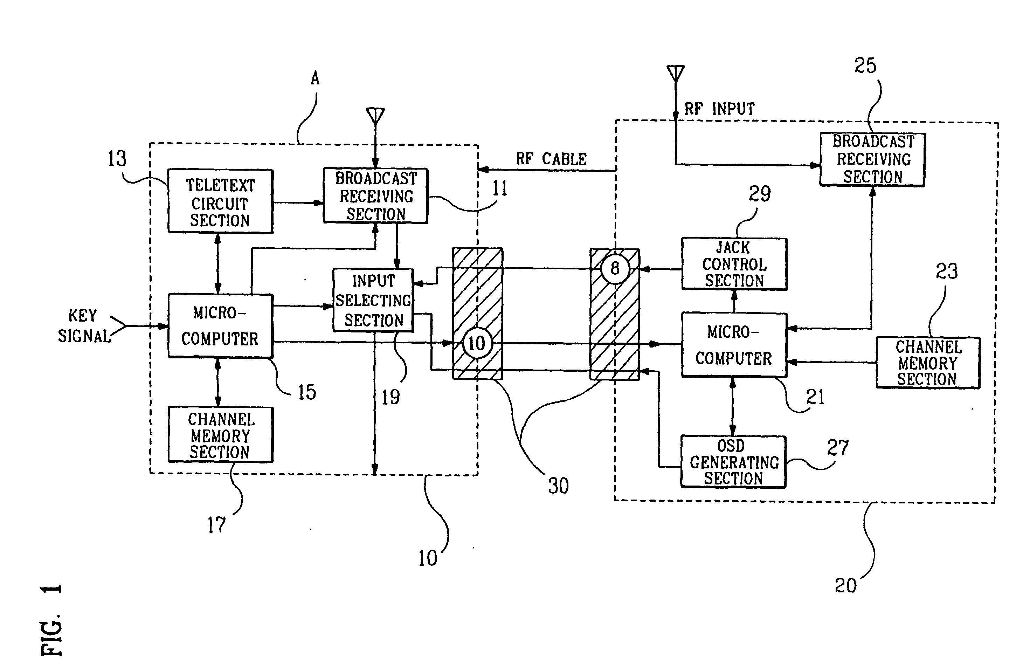

FIG. 1 is a block diagram showing the constitution of the system for carrying out a programmed recording according to the present invention.

As shown in this drawing, the system for carrying out a programmed recording according to the present invention includes: a TV receiver 10 for outputting a programmed recording information for a selected program selected from among teletext data of received broadcast signals (received through an antenna) in accordance with the intention of the user; a magnetic recording/reproducing apparatus 20 for storing the programmed recording information of the TV receiver, and for executing the programmed recording based on the programmed recording information; and a jack 30 for connecting the TV receiver and the magnetic recording/reproducing apparatus together to receive and transmit the programmed recording information and OSD messages.

The TV receiver 10 includes: a broadcast receiving section 11 for receiving broadcast signals including teletext data; a teletext circuit section 13 for detecting teletext data from among the broadcast signals of the broadcast receiving section 11; a microcomputer 15 for controlling the total system in response to the key signals of a user; a channel memory section 17 for storing a channel (selected by the user) in response to the control signals of the microcomputer 15; and an input selecting section 19 for outputting the output signals of the broadcast receiving section 11 or external signals in response to the control signals of the microcomputer 15.

The magnetic recording/reproducing apparatus 20 includes: a microcomputer 21 for controlling the total system of the magnetic recording/reproducing apparatus in response to the control signals of the microcomputer 15 of the TV receiver 10; a channel memory section 23 for storing the channel set by the user in response to the control signals of the microcomputer 21; a broadcast receiving section 25 for receiving broadcast signals of the relevant channel in response to the control signals of the microcomputer 21; an OSD generating section 27 for generating an OSD in response to the control signals of the microcomputer 21 after the microcomputer 21 compares the transmitted channel of the TV receiver with the stored channel of the channel memory section 23; and a jack control section 29 for controlling the jack 30 so as to output an OSD message through the input selecting section 19 of the TV receiver 10 to the TV screen in response to the control signals of the microcomputer 21.

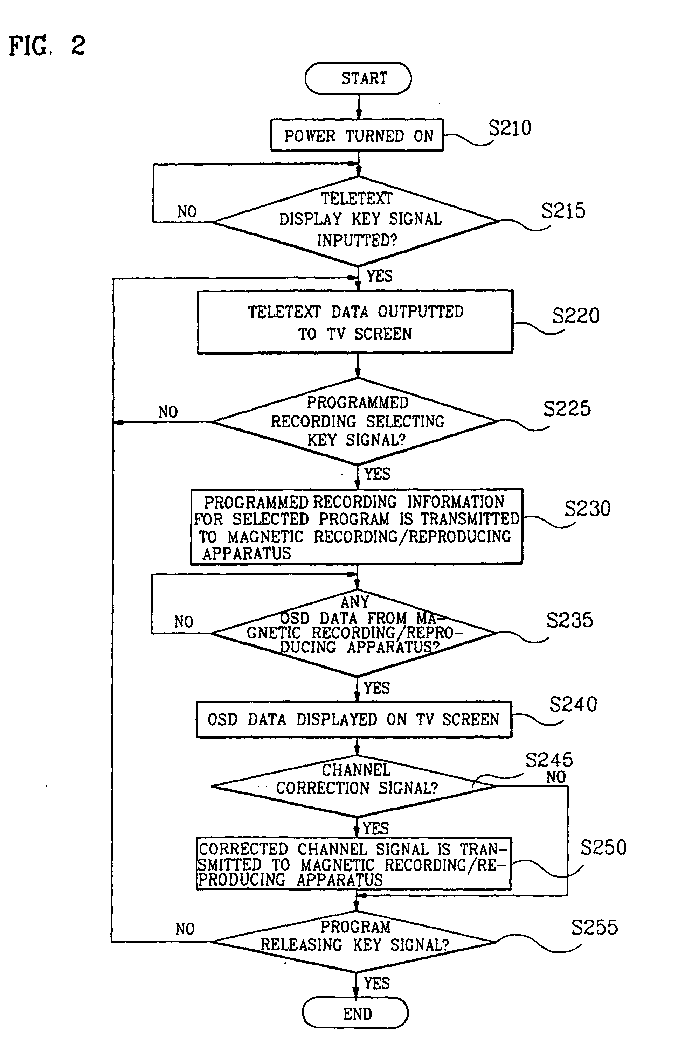

The system of the present invention constituted as above will now be described as to its operation referring to FIGs. 2, 3 and 4.

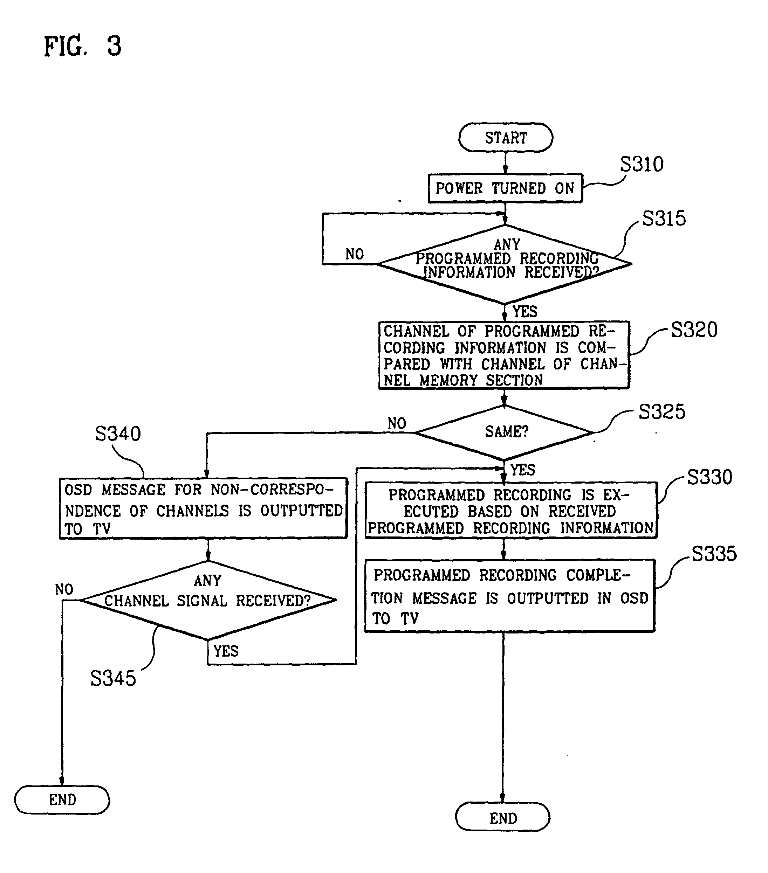

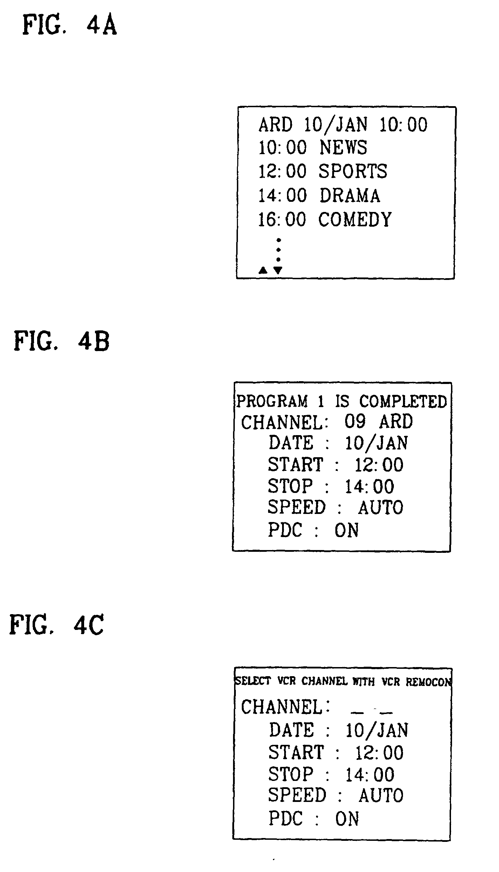

FIG. 2 is a flow chart showing the programmed recording operation of the TV receiver of FIG. 1. FIG. 3 is a flow chart showing the programmed recording operation of the magnetic recording/reproducing apparatus of FIG. 1. FIG. 4a illustrates a picture state showing teletext data in TV. FIG. 4b illustrates an OSD message notifying the completion of the programmed recording. FIG. 4c illustrates the picture state of the OSD message in which the channel selection data for the programmed recording are entered.

First, the user turns on the TV receiver 10 and the magnetic recording/reproducing apparatus 20 (S210 and S310). As shown in FIG. 2, if a key signal is inputted for displaying the teletext data on the screen (S215), then the microcomputer 15 outputs control signals to the teletext circuit section 13 in response to the key signal. Then only the teletext data from among the broadcast signals of the broadcast receiving section 11 are detected so as to be displayed on the TV screen (S220) (refer to FIG. 4a).

In order to select the program to be recorded, while watching the teletext data on the TV screen, the user places the cursor on the relevant program, and presses a program selecting key (S225).

Then the microcomputer 15 recognizes the key signal, and stores the relevant channel of the selected program into the channel memory section 17. Further, the set programmed recording information, i.e., the appointed time, the channel, the name of the program and the like are transmitted through 10th pin of the jack 30 to the microcomputer 21 of the magnetic recording/reproducing apparatus 20 (S230).

In this context, the channel data may be different between the TV receiver and the magnetic recording/reproducing apparatus, and therefore, they are transmitted with the standardized code.

As shown in FIG. 3, when there is a programmed recording (S315), its information is stored into an internal memory of the microcomputer 21. The channel data is subjected to a comparison to check as to whether there is the same code as the transmitted code within the channel memory section (S320). If there is the same channel (S325), the broadcast receiving section 25 receives the relevant channel at the appointed time in accordance with the control signals of the microcomputer 21, thereby carrying out the programmed recording (S330).

Then in response to the control signals of the microcomputer 21, the jack control section 29 controls the . jack 30, so that an OSD message for notifying the completion of the programmed recording can be outputted through an 8th pin of the jack 30 to the input selecting section 19 (S335).

Then the input selecting section 19 outputs an OSD message through the jack 30 to the TV screen in response to the control signals of the microcomputer 15 (S240), so that the user can watch it (refer to FIG. 4b)

If the channel information of the programmed recording information is not same as the channel stored within the channel memory section 23 (S325), then the microcomputer 21 outputs the data of FIG. 4c through the OSD generating section 27 and through the jack 30 to the TV screen (S340).

Then if the user inputs a key signal to correct the channel (S245), the microcomputer 15 of the TV receiver 10 transfers it through the jack 30 to the microcomputer 21 of the magnetic recording/reproducing apparatus 20.

Then if the microcomputer 21 receives the corrected channel signals (S345), then the received channel is stored into the channel memory section 23, so that the programmed recording can be carried out at the appointed time (S330). Then a completion OSD message is outputted to the TV screen (S340).

The above described steps are repeated until a programmed recording releasing signal is inputted by the user (S255).

According to the present invention as described above, in carrying out a programmed recording, the teletext circuit section of the TV receiver is used without installing a teletext circuit section within the magnetic recording/reproducing apparatus. Therefore, the cost of the magnetic recording /reproducing apparatus is lowered, and the user can carry out the programmed recording in a simple manner.

## Claims

1. A system for carrying out a programmed recording, comprising:
a TV receiver (10) for outputting a programmed recording information for a selected program selected from among teletext data of broadcast signals received through an antenna in accordance with an intention of a user;
a magnetic recording/reproducing apparatus (20) separate from said TV receiver for storing the programmed recording information of said TV receiver (10), and for executing a programmed recording based on the programmed recording information; and
a jack (30) for connecting said TV receiver (10) and said magnetic recording/reproducing apparatus (20) together to receive and transmit the programmed recording information and OSD messages.

2. A system as claimed in claim 1, wherein said TV receiver (10) comprises:
a broadcast receiving section (11) for receiving broadcast signals including teletext data;
a teletext circuit section (12) for detecting teletext data from among the broadcast signals of said broadcast receiving section (11);
a microcomputer (15) for controlling the total system in response to key signals of a user;
a channel memory section (17) for storing a channel selected by the user in response to the control signals of said microcomputer (15); and
an input selecting section (19) for outputting output signals of said broadcast receiving section (11) or external signals in response to the control signals of said microcomputer (15).

3. A system as claimed in claim 1, wherein said magnetic recording/reproducing apparatus (20) comprises:
a microcomputer (21) for controlling the total system of said magnetic recording/reproducing apparatus (20) in response to the control signals of said microcomputer of said TV receiver (10);
a channel memory section (23) for storing a channel set by the user in response to the control signals of said microcomputer (21);
a broadcast receiving section (25) for receiving broadcast signals of a relevant channel in response to the control signals of said microcomputer (21);
an OSD generating section (27) for generating an OSD in response to the control signals of said microcomputer (21) after said microcomputer (21) compares a transmitted channel of said TV receiver (10) with a stored channel of said channel memory section (23); and
a jack control section (29) for controlling said jack (30) so as to output an OSD message through said input selection section of said TV receiver (10) to a TV screen in response to the control signals of said microcomputer (21).

## Patentansprüche

1. System zum Ausführen einer programmierten Aufzeichnung, umfassend:
einen TV Empfänger (10) zum Ausgeben einer programmierten Aufzeichnungsinformation für ein gewähltes Programm, welches aus Teletextdaten von über eine Antenne empfangenen Aussendesignalen in Übereinstimmung mit einer Absicht eines Benutzers gewählt wird;
eine magnetische Aufzeichnungs-/Wiedergabe-Vorrichtung (20), die getrennt von dem TV Empfänger ist, zum Speichern der programmierten Aufzeichnungsinformation des TV Empfängers (10) und zum Ausführen einer programmierten Aufzeichnung auf Grundlage der programmierten Aufzeichnungsinformation; und
eine Klinke (30) zum Verbinden des TV Empfängers (10) und der magnetischen Aufzeichnungs-/Wiedergabe-Vorrichtung (20) untereinander, um die programmierte Aufzeichnungsinformation und OSD Nachrichten zu empfangen und zu senden.

2. System nach Anspruch 1, wobei der TV Empfänger (10) umfasst:
einen Aussendeempfangsabschnitt (11) zum Empfangen von Aussendesignalen, die Teletextdaten einschließen;
einen Teletextschaltungsabschnitt (12) zum Erfassen von Teletextdaten aus den Aussendesignalen des Aussendeempfangsabschnitts (11);
einen Mikrocomputer (15) zum Steuern des Gesamtsystems im Ansprechen auf Schlüsselsignale eines Benutzers;
einen Kanalspeicherabschnitt (17) zum Speichern eines Kanals gewählt durch den Benutzer im Ansprechen auf die Steuersignale des Mikrocomputers (15); und
einen Eingabewählabschnitt (19) zum Ausgeben von Ausgangssignalen des Aussendeempfangsabschnitts (11) oder externen Signalen im Ansprechen auf die Steuersignale des Mikrocomputers (15).

3. System nach Anspruch 1, wobei die magnetische Aufzeichnungs-/Wiedergabe-Vorrichtung (20) umfasst:
einen Mikrocomputer (21) zum Steuern des Gesamtsystems der magnetischen Aufzeichnungs-/Wiedergabe-Vorrichtung (20) im Ansprechen auf die Steuersignale des Mikrocomputers des TV Empfängers (10);
einen Kanalspeicherabschnitt (23) zum Speichern eines Kanalsatzes durch den Benutzer im Ansprechen auf die Steuersignale des Mikrocomputers (21);
einen Aussendeempfangsabschnitt (25) zum Empfangen von Aussendesignalen eines relevanten Kanals im Ansprechen auf die Steuersignale des Mikrocomputers (21);
einen OSD Erzeugungsabschnitt (27) zum Erzeugen eines OSDs im Ansprechen auf die Steuersignale des Mikrocomputers (21), nachdem der Mikrocomputer (21) einen gesendeten Kanal des TV Empfängers (10) mit einem gespeicherten Kanal des Kanalspeicherabschnitts (23) vergleicht; und
einen Klinken-Steuerabschnitt (29) zum Steuern der Klinke (30), um so eine OSD Nachricht durch den Eingabewählabschnitt des TV Empfängers (10) an einen TV Bildschirm im Ansprechen auf die Steuersignale des Mikrocomputers (21) auszugeben.

## Revendications

1. Système pour la mise en oeuvre d'un enregistrement programmé, comprenant:
un récepteur de TV (10) pour émettre en sortie une information d'enregistrement programmé pour un programme sélectionné qui est sélectionné à partir de données de télétexte de signaux diffusés reçus par l'intermédiaire d'une antenne conformément à une intention d'un utilisateur;
un appareil d'enregistrement/reproduction magnétique (20) séparé dudit récepteur de TV pour stocker l'information d'enregistrement programmé dudit récepteur de TV (10) et pour exécuter un enregistrement programmé sur la base de l'information d'enregistrement programmé; et
une prise (30) pour connecter ledit récepteur de TV (10) et ledit appareil d'enregistrement/reproduction magnétique (20) ensemble pour recevoir et émettre l'information d'enregistrement programmé et des messages OSD.

2. Système selon la revendication 1, dans lequel ledit récepteur de TV (10) comprend:
une section de réception de diffusion (11) pour recevoir des signaux de diffusion qui incluent des données de télétexte;
une section de circuit de télétexte (12) pour détecter des données de télétexte à partir des signaux de diffusion de ladite section de réception de diffusion (11);
un microcalculateur (15) pour commander le système total en réponse à des signaux de touches d'un utilisateur;
une section de mémoire de canal (17) pour stocker un canal qui est sélectionné par l'utilisateur en réponse aux signaux de commande dudit microcalculateur (15); et
une section de sélection d'entrée (19) pour émettre en sortie des signaux de sortie de ladite section de réception de diffusion (11) ou des signaux externes en réponse aux signaux de commande dudit microcalculateur (15).

3. Système selon la revendication 1, dans lequel ledit appareil d'enregistrement/reproduction magnétique (20) comprend:
un microcalculateur (21) pour commander le système total dudit appareil d'enregistrement/reproduction magnétique (20) en réponse aux signaux de commande dudit microcalculateur dudit récepteur de TV (10);
une section de mémoire de canal (23) pour stocker un canal qui est établi par l'utilisateur en réponse aux signaux de commande dudit microcalculateur (21);
une section de réception de diffusion (25) pour recevoir des signaux de diffusion d'un canal pertinent en réponse aux signaux de commande dudit microcalculateur (21);
une section de génération d'OSD (27) pour générer un OSD en réponse aux signaux de commande dudit microcalculateur (21) après que ledit micro calculateur (21) a comparé un canal émis dudit récepteur de TV (10) à un canal stocké de ladite section de mémoire de canal (23); et
une section de commande de prise (29) pour commander ladite prise (30) de manière à émettre en sortie un message OSD par l'intermédiaire de ladite section de sélection d'entrée dudit récepteur de TV (10) sur un écran de TV en réponse aux signaux de commande dudit microcalculateur (21).
